# EUROPÄISCHE PATENTSCHRIFT

(11) **EP 4 441 483 B1**
(45) Veröffentlichungstag und Bekanntmachung des Hinweises auf die Patenterteilung: **22.10.2025**
(21) Anmeldenummer: 22812583.7
(22) Anmeldetag: 31.10.2022
(51) Int. Cl.: G01M 3/22

(54) **DICHTHEITSPRÜFUNG MIT BLOCKIEREINRICHTUNG**
LEAK TEST USING A BLOCKING DEVICE
TEST DE FUITE À L'AIDE D'UN DISPOSITIF DE BLOCAGE

(30) Priorität: 29.11.2021 DE 102021131283
(43) Veröffentlichungstag der Anmeldung: 09.10.2024
(73) Patentinhaber: Inficon GmbH, 50968 Köln (DE)
(72) Erfinder: MEBUS, Stefan, 50968 Köln (DE)
(74) Vertreter: Dompatent Partnerschaft von Patent- und Rechtsanwälten mbB
(86) Internationale Anmeldenummer: PCT/EP2022/080385
(87) Internationale Veröffentlichungsnummer: WO 2023/094117

(56) Entgegenhaltungen:
- EP-B1- 0 931 253
- US-A1- 2010 326 173

## Beschreibung

Die Erfindung betrifft die Dichtheitsprüfung an einem Prüfling.

Zur Prüfung der Dichtheit von Prüflingen, wie zum Beispiel Lebensmittelverpackungen, ist es üblich und bekannt, den zu testenden Prüfling in eine Prüfkammer einzubringen, die Prüfkammer auf einen Druck zu evakuieren, der geringer ist als der Druck im Inneren des Prüflings. Im Inneren des Prüflings herrscht typischerweise atmosphärischer Druck. Das Evakuieren der Prüfkammer erfolgt mit Hilfe einer Vakuumpumpe.

Nach Evakuieren der Prüfkammer kann aus dem Prüfling in die Prüfkammer entweichendes Gas mit einem Gasdetektor oder Gasanalysegerät erfasst werden, wobei das Messen einer vorgegebenen Menge von Prüfgas darauf hindeutet, dass der Prüfling ein Leck aufweist, aus dem das Prüfgas aus dem Inneren des Prüflings in die Prüfkammer entweicht und zu dem Gasdetektor gelangt. Alternativ oder ergänzend kann der Druck im Inneren der Prüfkammer überwacht werden, wobei ein Anstieg des Drucks im Inneren der Prüfkammer oberhalb eines vorgegebenen Wertes oder einer vorgegebenen Rate darauf hindeutet, dass der Prüfling ein Leck aufweist, aus dem Gas aus dem Inneren des Prüflings in die Prüfkammer entweicht und dort den Druck erhöht.

Typischerweise werden eine Vielzahl von Prüflingen nacheinander auf Dichtheit untersucht, wobei ein Bediener die Prüflinge in die Prüfkammer einlegt, die Prüfkammer schließt, die Dichtheitsprüfung startet und überwacht, und anschließend nach erfolgter Dichtheitsprüfung die Prüflinge wieder entnimmt. Dabei besteht die Gefahr, dass ein als undicht erkannter Prüfling der Gruppe der zuvor als dicht erkannten Prüflinge zugeordnet und nicht von diesen getrennt wird.

EP 0 931 253 B1 beschreibt eine Vorrichtung zur Prüfung der Dichtheit von Verpackungen.

US 2010/0326173 A1 beschreibt ein Verfahren und eine Vorrichtung zum Testen gefüllter und versiegelter Container.

Der Erfindung liegt die Aufgabe zugrunde, eine verbesserte Dichtheitsprüfung zu ermöglichen.

Das erfindungsgemäße Verfahren ist definiert durch die Merkmale von Patentanspruch 1. Die erfindungsgemäße Dichtheitsprüfvorrichtung ist definiert durch die Merkmale von Patentanspruch 12.

Erfindungsgemäß wird die Prüfkammer in Abhängigkeit von dem Ergebnis der Dichtheitsprüfung blockiert, um ein Entnehmen des Prüflings aus der Prüfkammer zu verhindern, wenn das Ergebnis der Dichtheitsprüfung auf ein Leck im Prüfling hindeutet, während im Falle eines dichten Prüflings die Prüfkammer freigegeben wird. Dadurch wird vermieden, dass der die Prüflinge aus der Prüfkammer entnehmende Bediener einen als undicht erkannten Prüfling wie einen dichten Prüfling behandelt und der Prüfkammer entnimmt und versehentlich der Gruppe der zuvor als dicht getesteten Prüflinge zuordnet. Dadurch, dass die Prüfkammer im Falle eines undichten Prüflings blockiert wird, muss der Bediener zunächst weitere Tätigkeiten ausführen, um den Prüfling aus der Prüfkammer zu entnehmen. Der Ablauf ist dadurch für den Fall eines undichten Prüflings ein anderer als im Fall eines dichten Prüflings und das Risiko einer Verwechslung durch den Bediener ist reduziert.

Die den Prüfling enthaltende Prüfkammer kann vor der Dichtheitsprüfung auf einen Vakuumdruck, der geringer ist als der Druck im Inneren des Prüflings, evakuiert werden. Hierzu kann die Prüfkammer mit einer Vakuumpumpe verbunden sein. Im Falle eines Lecks im Prüfling tritt Gas aus dem Inneren des Prüflings durch das Leck in die Vakuumkammer.

Alternativ kann der Prüfling mit Überdruck und zumindest mit einem Anteil eines spezifischen Prüfgases beaufschlagt sein. Dieser Prüfling wird in eine Prüfkammer in Form einer Akkumulationskammer gelegt, in der die Prüfgaskonzentration gemessen wird. Die mit der Zeit ansteigende Prüfgaskonzentration in der Akkumulationskammer ist ein Maß für die Leckrate an dem Prüfling.

Das Blockieren der Prüfkammer kann automatisch in Abhängigkeit von dem Ergebnis der Dichtheitsprüfung erfolgen. Als Ergebnis der Dichtheitsprüfung ist das Messergebnis einer Messung mit einem Dichtheitsmessgerät, welches ein Gasdetektor, ein Gasanalysegerät und/oder ein Gasdruckmessgerät sein kann.

Zum Aufheben des Blockierens des Öffnens der Prüfkammer bzw. des Blockierens der Prüfkammer ist vorzugsweise ein Schlüssel erforderlich, der von einem menschlichen Bediener zu benutzen ist, um die Prüfkammer freizugeben. Bei dem Schlüssel kann es sich um einen elektronischen Schlüssel, beispielsweise in Form eines Passwortes oder Tokens oder um einen mechanischen Schlüssel handeln.

Das Blockieren der Prüfkammer kann mit Hilfe einer Blockiereinrichtung erfolgen, die von einer Steuereinrichtung betätigt wird, wobei die Steuereinrichtung Informationen über die Dichtheitsprüfung von einem Dichtheitsmessgerät empfängt. Unter einem Dichtheitsmessgerät wird ein Messgerät verstanden, das die Dichtheitsprüfung ausführt, wie zum Beispiel ein Gasdetektor, ein Gasanalysegerät, beispielsweise ein Massenspektrometer oder ein Infrarotabsorptionsanalysator, oder ein Gasdruckmessgerät.

Das Blockieren der Prüfkammer kann alternativ oder ergänzend durch Aufbringen oder Halten eines Vakuums im Inneren der Prüfkammer erfolgen. Bei diesem Ausführungsbeispiel kann als Blockiereinrichtung die Steuerungselektronik verstanden werden, die das Aufbringen oder Halten des Vakuums bewirkt, beispielsweise indem eine Vakuumpumpe aktiviert oder deren Betrieb aufrechterhalten wird.

Das Blockieren der Prüfkammer kann durch Aufbringen einer mechanischen Kraft erfolgen. Bei der Kraft kann es sich um eine Kraft handeln, die der zum Öffnen der Prüfkammer aufgebrachten Kraft entgegenwirkt. Die Kraft kann durch ein Vakuum im Inneren der Prüfkammer oder durch ein mechanisches Schließelement, beispielsweise ein Schloss oder einen Riegel, aufgebracht werden.

Das Messsignal des Dichtheitsmessgeräts kann als elektronisches Signal an eine Steuereinrichtung übermittelt werden, die elektronisch mit der Blockiereinrichtung verbunden ist, wobei die Steuereinrichtung im Falle eines als undicht erkannten Prüflings ein Steuersignal an die Blockiereinrichtung übermittelt, welches ein Betätigen der Blockiereinrichtung auslöst, um die Prüfkammer zu blockieren.

Vorliegend wird ein Prüfling, bei dem kein Leck erkannt wurde, als dicht bezeichnet, während ein Prüfling, bei dem ein Leck erkannt wurde, als undicht bezeichnet wird. Hierzu wird das Messignal des Dichtheitsmessgeräts typischerweise mit Referenzwerten und/oder einem Schwellenwert verglichen, um anhand des Messsignals automatisch beurteilen zu können, ob der Prüfling in die Gruppe dichter Prüflinge oder in die Gruppe undichter Prüflinge einzuordnen ist. Ein die Dichtheitsprüfung ausführender menschlicher Bediener wird einen Prüfling, der als dicht geprüft wurde, typischerweise einer Gruppe dichter Prüflinge zuordnen, in dem der aus der Prüfkammer entnommene Prüfling beispielsweise in einen hierzu vorgesehenen Behälter, auf ein hierzu vorgesehenes Fließband oder einen anderen räumlich umgrenzten Bereich bewegt wird. Die Erfindung soll das Risiko verringern, dass der menschliche Bediener einen als undicht erkannten Prüfling versehentlich der Gruppe der dichten Prüflinge zuordnet. Das Blockieren der Prüfkammer bewirkt hierzu einen Ablauf für den Bediener, der von demjenigen der dichten Prüflinge abweicht. Dadurch, dass die Prüfkammer bei der Entnahme des Prüflings blockiert wird, hat der Bediener eine zusätzliche Möglichkeit, zu erkennen, dass es sich um einen als undicht geprüften Prüfling handelt, der nicht der Gruppe der dichten Prüflinge zugeordnet werden darf.

Anhand der Fig. wird ein Ausführungsbeispiel der Erfindung näher erläutert. Die Fig. zeigt ein Blockschaltbild der erfindungsgemäßen Dichtheitsprüfvorrichtung.

Ein auf Dichtheit zu testender Prüfling 12 ist in das Innere einer Prüfkammer 14 eingelegt. Die Prüfkammer 14 ist eine herkömmliche Vakuumkammer und in der Fig. im verschlossenen Zustand dargestellt. Eine Vakuumpumpe 18 ist vakuumtechnisch mit der Prüfkammer 14 verbunden, um diese auf einen Druck zu evakuieren, der geringer ist, als der Druck im Inneren des Prüflings 12. Im Falle eines Lecks im Prüfling 12 wird Prüfgas aus dem Inneren des Prüflings 12 in das Innere der Prüfkammer 14 im Bereich außerhalb des Prüflings 12 entweichen.

Ein Dichtheitsmessgerät 16 ist zur Dichtheitsmessung ebenfalls vakuumtechnisch gasleitend mit dem Inneren der Prüfkammer 14 verbunden. In dem dargestellten Ausführungsbeispiel ist das Dichtheitsmessgerät 16 in dem die Prüfkammer 14 mit der Vakuumpumpe 18 verbindenden Gasleitungsweg enthalten. Andere Konfigurationen sind denkbar. Bei dem Dichtheitsmessgerät 16 kann es sich um einen herkömmlichen Gasdetektor, ein Gasanalysegerät oder um ein Druckmessgerät handeln, um den Druck im Inneren der Prüfkammer 14 zu überwachen. Für die Dichtheitsprüfung erforderliche Ventile sind vorhanden, aus Gründen der Einfachheit jedoch nicht in der Fig. dargestellt.

Sobald das Dichtheitsmessgerät 16 Prüfgas misst, das aus dem Inneren des Prüflings 12 entwichen ist oder im Falle eines Druckmessgeräts einen Druckanstieg misst, der auf ein Leck im Prüfling 12 hindeutet, sendet das Dichtheitsmessgerät 16 ein elektronisches Signal an eine elektronisch mit dem Dichtheitsmessgerät 16 verbundene Steuervorrichtung 22. Die Steuervorrichtung 22 ist dazu ausgebildet, im Falle eines Messsignals des Dichtheitsmessgeräts 16, welches auf einen undichten Prüfling 12 hindeutet, automatisch ein Steuersignal zu generieren, das eine Blockiereinrichtung 20 aktiviert, um ein Öffnen der Prüfkammer 14 zu verhindern. Hierzu ist die Steuereinrichtung 22 elektronisch mit der Blockiereinrichtung 20 verbunden. Bei der Blockiereinrichtung 20 kann es sich um eine mechanische Sperre oder um ein Schloss handeln, welches die Prüfkammer 14 verriegelt. Alternativ oder ergänzend kann es sich bei der Blockiereinrichtung 20 auch um ein Ventil handeln, welches das Innere der Prüfkammer 14 mit der die Prüfkammer 14 umgebenden Atmosphäre verbindet, und welches vor dem Öffnen der Prüfkammer 14 zum Belüften der Prüfkammer 14 geöffnet wird. Zum Blockieren der Prüfkammer 14 bleibt das Ventil verschlossen, so dass ein Belüften der Prüfkammer 14 verhindert wird. Der im Inneren der Prüfkammer herrschende Vakuumdruck ist dann so groß, dass ein menschlicher Bediener die Prüfkammer 14 nicht öffnen kann. Die Schließkraft zum Verschließen der Prüfkammer wird dann durch den Vakuumdruck erzeugt. Alternativ oder ergänzend kann die Schließkraft als mechanische Kraft von einer Schließvorrichtung aufgebracht werden.

Weiterhin ist denkbar, dass die Steuervorrichtung 22, die Vakuumpumpe 18 oder eine zusätzliche Vakuumpumpe aktiviert oder weiterhin in Betrieb lässt, um den Vakuumdruck im Inneren der Prüfkammer 14 aufrecht zu erhalten oder sogar zu vergrößern. In dem Fall könnte die Blockiereinrichtung 20 als Teil der Vakuumpumpe oder als zusätzliche Vakuumpumpe verstanden werden.

Wenn ein Bediener nun den Prüfling 12 aus der Prüfkammer 14 entnehmen möchte, nachdem die Dichtheitsprüfung ergeben hat, dass der Prüfling 12 ein Leck aufweist, muss der Bediener einen Schlüssel verwenden, um die Blockiereinrichtung 20 zu deaktivieren. Bei dem Schlüssel kann es sich beispielsweise um einen mechanischen Schlüssel handeln, um eine mechanische Schließvorrichtung aufzuschließen oder um der Steuervorrichtung 22 den Befehl zu geben, die Blockiereinrichtung 20 zu deaktivieren. Bei dem Schlüssel kann es sich auch um einen elektronischen Schlüssel in Form eines Passworts handeln, den der Benutzer in ein Bedienterminal der Steuervorrichtung 22 eingeben muss. In jedem Fall muss der Bediener, der den Prüfling 12 aus der Prüfkammer 14 entnehmen möchte, eine zusätzliche Handlung unternehmen, um einen undichten Prüfling aus der Prüfkammer 14 zu entnehmen, als im Fall eines dichten Prüflings. Dadurch ist das Risiko eines Verwechselns eines undichten Prüflings mit der Gruppe oder Menge der zuvor als dicht geprüfter Prüflinge reduziert.

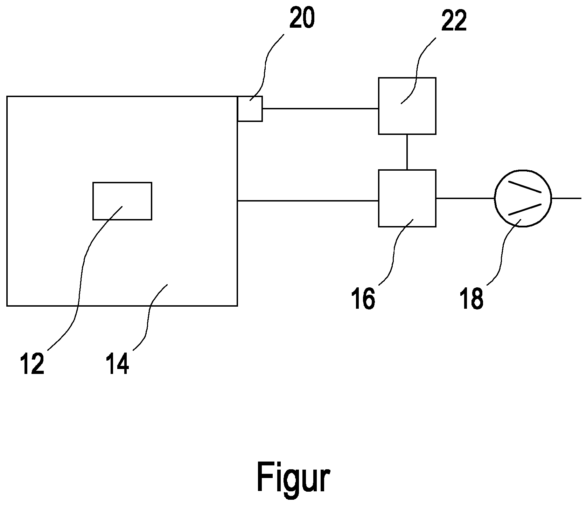

## Patentansprüche

1. Verfahren zur Dichtheitsprüfung eines Prüflings (12), mit den Schritten:
Einbringen des Prüflings (12) in eine Prüfkammer (14),
Prüfen der Dichtheit des Prüflings (12) in der Prüfkammer (14),
Öffnen der Prüfkammer (14) und Entnehmen des Prüflings (12), wenn die Dichtheitsprüfung die Dichtheit des Prüflings (12) festgestellt hat,
**dadurch gekennzeichnet,**
**dass** das Öffnen der Prüfkammer (14) blockiert wird, um eine Entnahme des Prüflings (12) zu verhindern, wenn die Dichtheitsprüfung ein Leck im Prüfling festgestellt hat.

2. Verfahren nach Anspruch 1, **dadurch gekennzeichnet, dass** das Blockieren der Prüfkammer (14) automatisch in Abhängigkeit von dem Ergebnis der Dichtheitsprüfung erfolgt.

3. Verfahren nach Anspruch 1 oder 2, **dadurch gekennzeichnet, dass** zum Aufheben des Blockierens ein elektronischer oder mechanischer Schlüssel erforderlich ist.

4. Verfahren nach einem der vorhergehenden Ansprüche, **dadurch gekennzeichnet, dass** das Blockieren der Prüfkammer mit Hilfe einer Blockiereinrichtung (20) erfolgt, die von einer Steuereinrichtung (22) betätigt wird, wobei die Steuereinrichtung (22) Informationen über die Dichtheitsprüfung von einem die Dichtheitsprüfung ausführenden Messgerät (16) empfängt.

5. Verfahren nach einem der vorhergehenden Ansprüche, **dadurch gekennzeichnet, dass** das Blockieren der Prüfkammer (14) durch Aufbringen oder Halten eines Vakuums im Inneren der Prüfkammer (14) erfolgt.

6. Verfahren nach einem der vorhergehenden Ansprüche, **dadurch gekennzeichnet, dass** das Blockieren der Prüfkammer (14) durch Aufbringen einer mechanischen Kraft erfolgt.

7. Verfahren nach Anspruch 6, **dadurch gekennzeichnet, dass** die mechanische Kraft von der Blockiereinrichtung (20) aufgebracht wird.

8. Verfahren nach Anspruch 7, **dadurch gekennzeichnet, dass** die Blockiereinrichtung (20) eine mechanische Schließvorrichtung ist.

9. Verfahren nach einem der vorhergehenden Ansprüche, **dadurch gekennzeichnet, dass** die den Prüfling (12) enthaltende Prüfkammer (14) zum Prüfen der Dichtheit des Prüflings auf einen Prüfkammerinnendruck evakuiert wird, der geringer ist als der Druck im Inneren des Prüflings, um aus einem Leck im Prüfling in die Prüfkammer gelangendes Gas zu detektieren.

10. Verfahren nach einem der Ansprüche 1-8, **dadurch gekennzeichnet, dass** der Druck im Inneren des Prüflings (12) zum Prüfen der Dichtheit des Prüflings auf einen Druck erhöht wird, der größer ist als der Druck im Inneren der Prüfkammer, um aus einem Leck im Prüfling in die Prüfkammer gelangendes Gas nach dem Akkumulationsprinzip zu detektieren.

11. Verfahren nach einem der vorhergehenden Ansprüche, **dadurch gekennzeichnet, dass** der Schritt des Prüfens der Dichtheit des Prüflings (12) mit Hilfe eines Messgeräts (16) in Form eines Druckmessgeräts oder eines Gasdetektors oder Gasanalysegeräts ausgeführt wird, wobei das Messsignal des Messgeräts (16) an eine die Blockiereinrichtung (20) betätigende Steuereinrichtung (22) übermittelt wird.

12. Dichtheitsprüfvorrichtung zur Prüfung der Dichtheit eines Prüflings (12), mit einer den Prüfling (12) aufnehmenden Prüfkammer (14), einem mit der Prüfkammer (14) verbundenen Dichtheitsmessgerät (16),
**dadurch gekennzeichnet,**
**dass** eine Blockiereinrichtung (20) dazu ausgebildet ist, die Prüfkammer (14) zu blockieren, um ein Entnehmen des Prüflings (12) zu verhindern, wenn das Messsignal des Dichtheitsmessgerätes (16) einem undichten Prüfling (12) entspricht, und ein Öffnen der Prüfkammer (14) zu ermöglichen, wenn das Messsignal einem dichten Prüfling entspricht.

13. Dichtheitsprüfvorrichtung nach Anspruch 12, **gekennzeichnet durch** eine mit der Prüfkammer (14) verbundene Vakuumpumpe (18), um die Prüfkammer zu evakuieren.

## Claims

1. A method for leak testing of a test specimen (12), comprising the following steps:
placing the test specimen (12) in a test chamber (14),
testing the leak-tightness of the test specimen (12) in the test chamber (14),
opening the test chamber (14) and removing the test specimen (12) if the leak test has determined that the test specimen (12) is leak-tight,
**characterized in that**
opening the test chamber (14) is blocked in order to prevent removal of the test specimen (12) if the leak test has determined a leak in the test specimen.

2. The method according to claim 1, **characterized in that** the test chamber (14) is automatically blocked depending on the result of the leak test.

3. The method according to claim 1 or 2, **characterized in that** an electronic or mechanical key is required to release the blocking.

4. The method according to any one of the preceding claims, **characterized in that** the test chamber is blocked with the aid of a blocking device (20) actuated by a control device (22), the control device (22) receiving information about the leak test from a measuring device (16) carrying out the leak test.

5. The method according to any one of the preceding claims, **characterized in that** the test chamber (14) is blocked by applying or holding a vacuum inside the test chamber (14).

6. The method according to any one of the preceding claims, **characterized in that** the test chamber (14) is blocked by applying a mechanical force.

7. The method according to claim 6, **characterized in that** the mechanical force is applied by the blocking device (20).

8. The method according to claim 7, **characterized in that** the blocking device (20) is a mechanical closing device.

9. The method according to any one of the preceding claims, **characterized in that** the test chamber (14) containing the test specimen (12) is evacuated to a test chamber internal pressure which is lower than the pressure inside the test specimen for testing the leak-tightness of the test specimen, in order to detect gas entering the test chamber from a leak in the test specimen.

10. The method according to any one of claims 1-8, **characterized in that** the pressure inside the test specimen (12) for testing the leak-tightness of the test specimen is increased to a pressure which is higher than the pressure inside the test chamber, in order to detect gas entering the test chamber from a leak in the test specimen according to the accumulation principle.

11. The method according to any one of the preceding claims, **characterized in that** the step of testing the leak-tightness of the test specimen (12) is carried out with the aid of a measuring device (16) in the form of a pressure measuring device or a gas detector or a gas analyzer, the measuring signal of the measuring device (16) being transmitted to a blocking device (20) actuating the control device (22).

12. A leak testing device for testing the leak-tightness of a test specimen (12), comprising a test chamber (14) receiving the test specimen (12), a leak detector (16) connected to the test chamber (14),
**characterized in that**
a blocking device (20) is configured to block the test chamber (14) in order to prevent removal of the test specimen (12) if the measuring signal of the leak detector (16) corresponds to a leaking test specimen (12), and to enable the test chamber (14) to be opened if the measuring signal corresponds to a non-leaking test specimen.

13. The leak testing device according to claim 12, **characterized by** vacuum pump (18) connected to the test chamber (14) in order to evacuate the test chamber.

## Revendications

1. Procédé de test d'étanchéité d'un échantillon de test (12), comprenant les étapes consistant à :
introduire l'échantillon de test (12) dans une chambre de test (14),
vérifier l'étanchéité de l'échantillon de test (12) dans la chambre de test (14),
ouvrir la chambre de test (14) et retirer l'échantillon de test (12) lorsque le test d'étanchéité a déterminé l'étanchéité de l'échantillon de test (12),
**caractérisé en ce que**,
l'ouverture de la chambre de test (14) est bloquée afin d'empêcher le retrait de l'échantillon de test (12) si le test d'étanchéité a détecté une fuite dans l'échantillon de test.

2. Procédé selon la revendication 1, **caractérisé en ce que** le blocage de la chambre de test (14) intervient de manière automatique en fonction du résultat du test d'étanchéité.

3. Procédé selon la revendication 1 ou 2, **caractérisé en ce qu'**une clé électronique ou mécanique est nécessaire pour mettre fin au blocage.

4. Procédé selon l'une quelconque des revendications précédentes, **caractérisé en ce que** le blocage de la chambre de test intervient à l'aide d'un dispositif de blocage (20) qui est actionné par un dispositif de commande (22), le dispositif de commande (22) recevant des informations sur le test d'étanchéité en provenance d'un appareil de mesure (16) mettant en œuvre le test d'étanchéité.

5. Procédé selon l'une quelconque des revendications précédentes, **caractérisé en ce que** le blocage de la chambre de test (14) intervient grâce à l'application ou au maintien d'un vide à l'intérieur de la chambre de test (14).

6. Procédé selon l'une quelconque des revendications précédentes, **caractérisé en ce que** le blocage de la chambre de test (14) intervient grâce à l'application d'une force mécanique.

7. Procédé selon la revendication 6, **caractérisé en ce que** la force mécanique est appliquée par le dispositif de blocage (20).

8. Procédé selon la revendication 7, **caractérisé en ce que** le dispositif de blocage (20) est un dispositif de fermeture mécanique.

9. Procédé selon l'une quelconque des revendications précédentes, **caractérisé en ce que** la chambre de test (14) contenant l'échantillon de test (12) est mise sous vide afin de vérifier l'étanchéité de l'échantillon de test à une pression interne de chambre de test qui est inférieure à la pression régnant à l'intérieur de l'échantillon de test afin de détecter du gaz entrant dans la chambre de test en provenance d'une fuite présente dans l'échantillon de test.

10. Procédé selon l'une quelconque des revendications 1 à 8, **caractérisé en ce que** la pression à l'intérieur de l'échantillon de test (12) est augmentée afin de vérifier l'étanchéité de l'échantillon de test à une pression qui est supérieure à la pression régnant à l'intérieur de la chambre de test afin de détecter, selon le principe d'accumulation, du gaz entrant dans la chambre de test en provenance d'une fuite présente dans l'échantillon de test.

11. Procédé selon l'une quelconque des revendications précédentes, **caractérisé en ce que** l'étape de test de l'étanchéité de l'échantillon de test (12) est mise en œuvre à l'aide d'un appareil de mesure (16) sous la forme d'un appareil de mesure de pression ou d'un détecteur de gaz ou d'un analyseur de gaz, le signal de mesure de l'appareil de mesure (16) étant transmis à un dispositif de commande (22) actionnant le dispositif de blocage (20).

12. Dispositif de test d'étanchéité permettant de vérifier l'étanchéité d'un échantillon de test (12), comprenant une chambre de test (14) accueillant l'échantillon de test (12), et un appareil de mesure d'étanchéité (16) relié à la chambre de test (14),
**caractérisé en ce**
**qu'**un dispositif de blocage (20) est conçu pour bloquer la chambre de test (14) afin d'empêcher le retrait de l'échantillon de test (12) si le signal de mesure de l'appareil de mesure d'étanchéité (16) correspond à un échantillon de test (12) non étanche, et afin de permettre l'ouverture de la chambre de test (14) si le signal de mesure correspond à un échantillon de test étanche.

13. Dispositif de test d'étanchéité selon la revendication 12, **caractérisé par** une pompe à vide (18) reliée à la chambre de test (14) afin de mettre la chambre de test sous vide.
